(19) **Europäisches Patentamt / European Patent Office / Office européen des brevets**

(11) **EP 3 574 200 B1**

(12) **FASCICULE DE BREVET EUROPEEN**

(45) Date de publication et mention de la délivrance du brevet:
**05.05.2021 Bulletin 2021/18**

(21) Numéro de dépôt: **18705691.6**

(22) Date de dépôt: **30.01.2018**

(51) Int Cl.:
*F02C 9/30* (2006.01)

(86) Numéro de dépôt international:
**PCT/FR2018/050203**

(87) Numéro de publication internationale:
**WO 2018/138456 (02.08.2018 Gazette 2018/31)**

(54) **CIRCUIT D'ALIMENTATION EN CARBURANT DE TURBOMACHINE**

SYSTEM ZUR VERSORGUNG EINER TURBOMASCHINE MIT KRAFTSTOFF

CIRCUIT FOR SUPPLYING FUEL TO A TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2017 FR 1750748**

(43) Date de publication de la demande:
**04.12.2019 Bulletin 2019/49**

(73) Titulaire: **Safran Aircraft Engines
75015 Paris (FR)**

(72) Inventeurs:
- **DE WERGIFOSSE, Huguette
  77550 Moissy-Crayamel (FR)**

- **PORA, Loïc
  77550 Moissy-Crayamel (FR)**
- **DE WERGIFOSSE, Eric
  31702 Blagnac Cedex (FR)**

(74) Mandataire: **Gevers & Orès
Immeuble le Palatin 2
3 Cours du Triangle
CS 80165
92939 Paris La Défense Cedex (FR)**

(56) Documents cités:
**EP-A2- 1 344 917       FR-A1- 2 685 735
FR-A1- 2 934 321       US-A1- 2007 130 911
US-A1- 2016 186 670**

Printed by Jouve, 75001 PARIS (FR)

## Description

### Domaine de l'invention:

La présente invention se rapporte au domaine des turbomachines. Elle concerne plus particulièrement le circuit d'alimentation en carburant et la régulation du débit de carburant dans ce circuit.

### Etat de la technique :

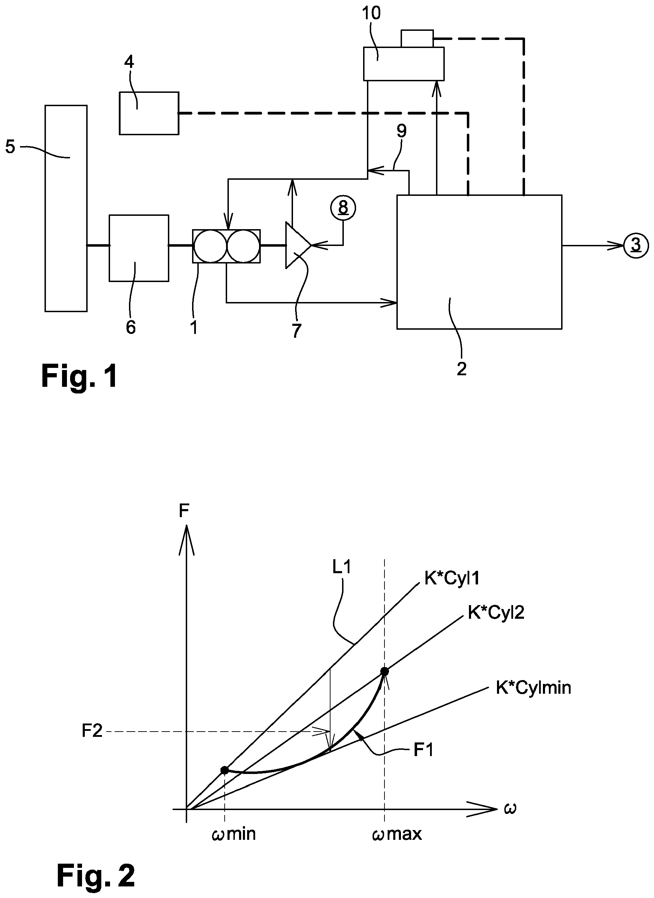

Les turbomachines installées sur un aéronef sont équipées d'un circuit d'alimentation en carburant, délivrant le carburant à la chambre de combustion, qui doit être régulé en fonction du besoin selon les conditions de vol. En référence à la figure 1, le circuit de carburant comprend généralement une pompe 1 principale haute pression de type volumétrique qui envoie le carburant vers un groupe hydromécanique 2 avant l'injection vers la chambre de combustion 3. L'ensemble est agencé pour assurer, en sortie vers la chambre de combustion, un débit de carburant adapté au besoin. Un boîtier de commande 4 pilote généralement le groupe hydromécanique 2 pour qu'il adapte le débit envoyé par la pompe 1 au besoin de la chambre de combustion 3.

En général, la pompe 1 est entraînée par un arbre de sortie du boîtier d'accessoires 5 de la turbomachine, lui-même entraîné par un axe du corps primaire de la turbomachine, non représenté sur la figure 1. Un dispositif d'entraînement 6 est généralement installé entre l'arbre du boîtier de relais d'accessoires 5 et la pompe 1 pour adapter les régimes de rotation entre ces deux équipements. Ce dispositif détermine un rapport K entre la vitesse de la pompe 1 et la vitesse de rotation $\omega$ de l'axe moteur de la turbomachine. Ce dispositif entraîne généralement aussi un moyen d'alimentation 7 du circuit à partir des réservoirs de carburant 8.

La caractéristique linéaire Cyl de la pompe 1 entre le débit de carburant et sa vitesse d'entraînement dépend en particulier de sa cylindrée. La pompe 1 doit être dimensionnée de telle manière que cette cylindrée permette de délivrer les débits requis pour tous les régimes de fonctionnement de la turbomachine, donc de vitesse de l'arbre de sortie du boîtier de relais d'accessoires 5, aussi bien à basse vitesse qu'à haute vitesse.

Comme on peut le voir sur la figure 2, représentant les variations de débit F en fonction de la vitesse de rotation $\omega$ de l'axe moteur de la turbomachine, le besoin F1 en carburant varie de façon non linéaire en fonction du régime de la turbomachine. La vitesse de rotation $\omega$ de l'axe moteur de la turbomachine varie entre une valeur minimale $\omega min$, pour l'allumage de la turbomachine, et une valeur maximale $\omega max$ pour le décollage. Le régime correspondant à un vol de croisière se situe entre ces deux extrêmes.

Suivant l'application, le point crucial est situé soit à l'allumage basse vitesse soit au décollage, à haute vitesse. Sur la figure 2, ce point crucial se situe au niveau de l'allumage, il faut choisir la cylindrée de la pompe de telle manière que sa caractéristique linéaire soit égale à la valeur Cyl1, pour assurer un débit suffisant lors de toutes les conditions de vol. Cette valeur Cyl1 peut être significativement supérieure à la valeur minimale Cylmin nécessaire dans certaines conditions de vol, voire à celle Cyl2 nécessaire lors du décollage.

Suivant ce dimensionnement, le débit fourni par la pompe suit donc la droite L1 sur le diagramme débit/vitesse de rotation de la figure 2. Pendant une large phase de vitesse d'entraînement, notamment en vol de croisière, la pompe délivre donc un débit supérieur au besoin en débit carburant, donc un surplus F2 de carburant.

Le groupe hydromécanique 2 doit donc renvoyer vers la pompe, par une boucle de recirculation 9, le surplus de carburant F2 par rapport au besoin.

Ce problème de régulation du débit de carburant est encore accentué lorsque le circuit de carburant est utilisé, comme indiqué sur la figure 1, pour actionner des géométries variables 10 de la turbomachine. L'actionnement des géométries variables 10 crée des variations de besoin en carburant dans le circuit qui doivent être prises en compte dans le dimensionnement de la pompe 1, dans le fonctionnement du groupe hydromécanique 2 et dans les caractéristiques de la boucle de recirculation 9.

Cette architecture du système d'alimentation en carburant présente plusieurs inconvénients. Le surplus de débit injecté par la pompe 1 induit un surplus de prélèvement de puissance sur le boîtier de relais d'accessoires 5 par rapport au besoin, préjudiciable au rendement de la turbomachine. Le surplus de puissance mécanique se transforme en puissance thermique dissipée dans la boucle de recirculation 9 qui doit être évacuée. Cela a une influence négative sur la taille et la masse du circuit de carburant, notamment pour des échangeurs thermiques, non représentés, placés pour évacuer la chaleur dans ce circuit.

Il est donc important d'adapter le débit de la pompe 1 aux différents points de fonctionnement de la turbomachine pour gagner en puissance prélevée sur le boîtier de relais d'accessoires 5, ce que ne permet pas le dispositif d'entraînement 6 de l'état de l'art.

Par ailleurs, un groupe hydromécanique 2 selon l'état de la technique, non détaillé sur la figure, est généralement composé :

- d'un doseur piloté par une servovalve dont la position est contrôlée par un capteur de position ;
- d'une soupape régulatrice, envoyant le surplus de débit délivré par la pompe dans la boucle de recirculation 9, et régulant la différence de pression aux bornes du doseur ;
- D'un clapet stop, piloté par une servovalve permettant de pressuriser le système carburant et de couper l'injection.

Le dimensionnement de la pompe 1 est normalement réalisé en considérant un surplus de débit égal à la somme des fuites du système, du débit minimum nécessaire pour réguler l'écart de pression aux bornes du doseur et du débit lié aux déplacements des géométries variables 10.

Ce surplus de débit peut représenter entre 60 et 95% du débit total dimensionnant la pompe 1 en prenant en compte le diagramme de la figure 2.

En admettant que l'on ait solutionné le problème de l'adaptation de la vitesse de rotation de la pompe selon les points de fonctionnement de la turbomachine, un circuit carburant classique nécessite ce dernier surplus de débit. Il ne permet donc pas d'atteindre le gain maximum de puissance rendu possible par une éventuelle adaptation du régime de la pompe 1.

L'art antérieur comprend également le document US-A1-2016/186670.

L'invention a pour objectif de proposer une solution permettant de tirer partie de manière plus optimale d'un gain de puissance autorisé par l'adaptation du régime de la pompe au besoin en carburant de la turbomachine pour ses différents points de fonctionnement et de prélever sur l'arbre moteur une puissance correspondant au strict besoin.

**Exposé de** l'invention :

L'invention a pour premier objet un système d'alimentation en carburant d'une turbomachine, comportant un circuit de carburant comportant :

- une pompe agencée pour envoyer dans ledit circuit de carburant un débit de carburant qui est une fonction croissante de la vitesse de rotation d'un arbre de ladite pompe ;
- un groupe hydromécanique agencé pour commander une sortie de carburant vers une chambre de combustion ;
- un dispositif d'entraînement agencé pour entraîner l'arbre de la pompe avec une vitesse de rotation commandable ;
- une branche comportant des actionneurs pour commander des géométries variables de la turbomachine, ladite branche démarrant par un piquage sur une dérivation placée entre la sortie de la pompe et ledit groupe hydromécanique ;

le système étant configuré pour réguler un débit de carburant vers ladite chambre de combustion à partir d'une consigne de débit, caractérisé en ce que ledit système d'alimentation comporte en outre :

- un capteur de débit placé dans le groupe hydromécanique ;
- une boucle de débit agencée pour déterminer une consigne de pression en sortie de la pompe en fonction de la consigne de débit et d'une mesure fournie par ledit capteur de débit ;
- un capteur de pression placé dans le circuit de carburant à la sortie de la pompe ;
- une boucle de pression agencée pour commander la vitesse du dispositif d'entraînement à partir d'un écart entre une mesure de pression fournie par le capteur de pression et ladite consigne de pression, de manière à adapter rapidement le débit fourni par la pompe à la consigne de débit.

Grâce à la réaction rapide obtenue par la boucle de pression, qui réagit rapidement, par exemple aux sollicitations des actionneurs de géométries variables, on peut ici même pour une architecture avec des géométries variables supprimer la boucle de recirculation de carburant. Ce concept permet donc de tirer parti de manière optimale de la capacité du dispositif d'entraînement à adapter la vitesse de la pompe pour fournir un débit correspondant au besoin.

En particulier, sans la boucle de pression, les appels de débit des actionneurs de géométries variables risquent de générer un impact sur le débit injecté, impact dépendant du niveau du débit appelé pour les actionneurs et du temps de réaction de la boucle de débit.

Ce concept permet donc de diminuer la puissance prélevée pour alimenter la turbomachine en carburant et de diminuer les réjections thermiques.

La réactivité du système, et notamment de la boucle de pression, est particulièrement adaptée au cas où le circuit de carburant est utilisé pour actionner les géométries variables.

Un tel système d'alimentation en carburant permet donc de supprimer totalement la boucle de recirculation grâce à la réactivité du système. Il utilise également un groupe hydromécanique plus simple et moins encombrant que celui de la solution classique.

De préférence, des moyens de temporisation hydrauliques sont placés dans le circuit de carburant, entre la dérivation et les actionneurs des géométries variables afin de minimiser la puissance électrique requise par le dispositif d'entraînement.

Ces moyens de temporisation sont avantageusement formés par un accumulateur hydraulique couplé à un régulateur de pression.

Ces moyens de temporisation permettent de réduire les contraintes technologiques liées à la réactivité sur le dispositif d'entraînement et sur les moyens de commande de ce dispositif. Ces moyens de temporisation permettent de réduire principalement la puissance électrique requise pour commander le dispositif d'entraînement, soit la taille des machines de pilotage de ce dispositif.

L'invention a pour deuxième objet un système d'alimentation en carburant d'une turbomachine, comportant un circuit de carburant comportant :

- une pompe agencée pour envoyer dans ledit circuit de carburant un débit de carburant qui est une fonction croissante de la vitesse de rotation d'un arbre de ladite pompe ;
- un groupe hydromécanique agencé pour commander une sortie de carburant vers une chambre de combustion ;
- un dispositif d'entraînement agencé pour entraîner l'arbre de la pompe avec une vitesse de rotation commandable ;
- une branche comportant des actionneurs pour commander des géométries variables de la turbomachine, ladite branche démarrant par un piquage sur une dérivation placée entre la sortie de la pompe et ledit groupe hydromécanique ;

le système étant configuré pour réguler un débit de carburant vers ladite chambre de combustion à partir d'une consigne de débit, caractérisé en ce que ledit système d'alimentation comporte en outre :

- un doseur placé dans le groupe hydromécanique agencé pour envoyer un débit égal à la consigne de débit vers la sortie du circuit de carburant ;
- une soupape régulatrice agencée pour être pilotée hydrauliquement par une différence de pression aux bornes du doseur afin de maintenir une différence de pression aux bornes de la soupape régulatrice constante et égale à une pression de référence constante ;
- des moyens de mesure de ladite différence de pression aux bornes de la soupape régulatrice ;
- une boucle de débit agencée pour commander le courant d'une servovalve de pilotage du doseur à partir de la consigne de débit et d'un débit mesuré via le doseur ;
- une boucle de pression agencée pour commander la vitesse du dispositif d'entraînement à partir d'un écart de ladite différence de pression aux bornes de la soupape régulatrice par rapport à la pression de référence constante, de manière à adapter rapidement le débit fourni par la pompe à la consigne de débit, notamment lors d'un actionnement desdites géométries variables.

La boucle de pression est active principalement lors des appels de débit des géométries variables.

Grâce à la réaction rapide obtenue par la boucle de pression, qui réagit rapidement, par exemple aux sollicitations des actionneurs de géométries variables, on peut diminuer largement la boucle de recirculation de carburant. Ce concept permet donc de tirer parti de manière optimale de la capacité du dispositif d'entraînement à adapter la vitesse de la pompe pour fournir un débit correspondant quasi au besoin car une boucle de recirculation minimale subsiste qui permet de commander le dispositif d'entraînement lors des appels de débit des géométries variables.

En particulier, sans la boucle de pression, les appels de débit des actionneurs de géométries variables risquent de générer un impact sur le débit injecté car la boucle de recirculation n'est pas dimensionnée pour compenser ces appels de débit de géométries variables, impact dépendant du niveau du débit appelé pour les actionneurs et du temps de réaction de la boucle de débit.

Ce concept permet donc de diminuer la puissance prélevée pour alimenter la turbomachine en carburant et de diminuer les réjections thermiques.

La réactivité du système, et notamment de la boucle de pression, est particulièrement adaptée au cas où le circuit de carburant est utilisé pour actionner les géométries variables.

Un tel système d'alimentation en carburant utilise un groupe hydromécanique existant et requiert l'utilisation d'une boucle de recirculation minimale. En comparaison à l'art antérieur, un tel système d'alimentation en carburant permet de réduire significativement la puissance prélevée sur la turbomachine ainsi que les réjections thermiques.

Les caractéristiques techniques mentionnées ci-après peuvent être appliquées à l'un ou l'autre des systèmes d'alimentation en carburant explicités ci-dessus.

De manière préférentielle, le dispositif d'entraînement est destiné à entraîner la pompe à partir d'un axe moteur de ladite turbomachine et comporte un réducteur à train épicycloïdal comprenant trois éléments, un planétaire central, une couronne externe et un porte-satellites dont les satellites s'engrènent avec le planétaire et la couronne, un premier des trois éléments étant destiné à être relié à l'axe moteur et un second des trois éléments étant couplé à l'arbre de la pompe, ledit dispositif étant caractérisé en ce que lesdits trois éléments sont mobiles en rotation autour d'un axe du réducteur, en ce que ledit dispositif de transmission comporte en outre au moins des premiers moyens électriques agencés pour entraîner en rotation le troisième desdits éléments du réducteur, de manière à modifier un rapport de vitesse de rotation entre le l'axe moteur et l'arbre de la pompe.

De manière encore plus préférentielle, le dispositif d'entraînement comporte des seconds moyens électriques couplés au premier ou au second desdits éléments du réducteur, les premier et second moyens électriques étant agencés pour transférer de la puissance électrique de manière réversible de l'un à l'autre.

Le transfert de puissance entre les deux moyens électriques permet de diminuer la puissance prélevée sur l'arbre de la turbomachine et de ne pas apporter de puissance électrique au dispositif.

De préférence, le système comporte des moyens électroniques agencés pour former une boucle de rétroaction en vitesse du pilotage du premier moyen électrique, de manière à assurer le transfert de puissance entre les deux moyens électriques.

La dynamique du système dépend de la puissance électrique installée pour accélérer l'inertie faible des premier et second moyens électriques et ainsi pour réajuster la vitesse de la pompe.

Avantageusement, le capteur de débit est obtenu par un doseur de débit dont la position reflète le débit qui le traverse.

L'invention concerne aussi une turbomachine comportant un système tel que décrit précédemment.

Avantageusement, un boîtier de relais d'accessoires est placé entre l'axe moteur et le dispositif de transmission.

**Brève description des** figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

la figure 1 présente très schématiquement un circuit de carburant selon l'état de la technique ;
la figure 2 présente un diagramme en vitesse de rotation et débit montrant l'écart entre le débit fourni par la pompe de carburant et le besoin pour un circuit selon la figure 1;
la figure 3 présente très schématiquement une demi coupe d'une turbomachine pouvant utiliser l'invention ;
la figure 4 présente des vues en éclaté et un schéma pour un réducteur à train épicycloïdal pouvant être utilisé par l'invention ;
la figure 5 présente le schéma d'un dispositif de transmission entre la turbomachine et la pompe, utilisant un réducteur de la figure 4 ;
la figure 6 présente très schématiquement un premier mode de réalisation d'un système d'alimentation en carburant selon l'invention ;
la figure 7 présente très schématiquement une variante du premier mode de réalisation d'un système d'alimentation en carburant selon l'invention ; et
la figure 8 présente très schématiquement un second mode de réalisation d'un système d'alimentation en carburant selon l'invention.

Les éléments ayant les mêmes fonctions dans les différentes mises en œuvre ont les mêmes références dans les figures.

**Description d'un mode de réalisation** :

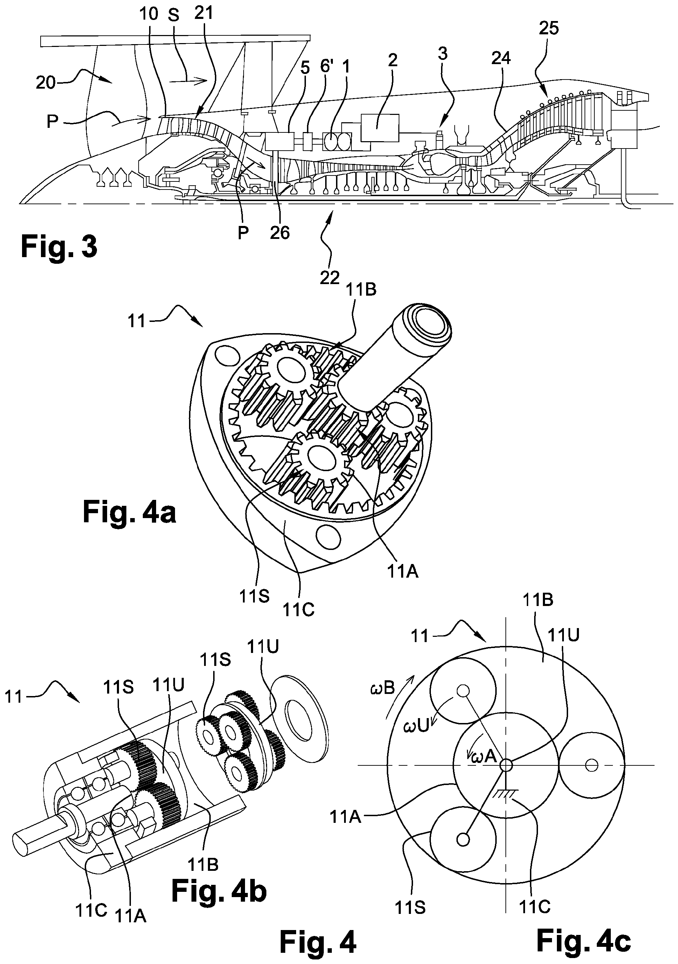

Dans une turbomachine, par exemple une turbomachine à double flux représentée sur la figure 3, le flux d'air en sortie de soufflante 20 se divise en un flux primaire P entrant dans le moteur et en un flux secondaire S entourant ce dernier. Le flux primaire traverse alors des compresseurs basse pression 21 et haute pression 22, la chambre de combustion 3 alimentée par le circuit de carburant précédemment évoqué, puis des turbines haute pression 24 et basse pression 25. Généralement, l'ensemble des compresseurs haute pression 22 et des turbines haute pression 24 tourne d'un bloc sur un axe commun 26 et forme la partie moteur de la turbomachine avec la chambre de combustion.

Généralement, l'axe moteur 26 entraîne le boîtier de relais d'accessoires 5 qui peut comporter plusieurs trains d'engrenages reliés à des arbres de sortie pour entraîner divers équipements. Ici un des arbres de sortie du boîtier d'engrenage entraîne, par un dispositif d'entraînement 6', la pompe volumétrique 1 qui alimente le groupe hydromécanique 2 injectant le carburant dans la chambre de combustion 3. Généralement aussi, le boîtier de relais d'accessoires fait le lien entre l'axe moteur 26 et un démarreur/générateur, non représenté sur cette figure, qui peut être utilisé pour entraîner la turbomachine lors des phases de démarrage ou générer un courant électrique lorsque la turbomachine est allumée.

La turbomachine comporte aussi des géométries variables 10, précédemment évoquées, que l'on peut activer dans certaines conditions d'utilisation. Ces géométries variables 10 sont, par exemple, des aubes à calage variable en entrée de compresseur basse pression.

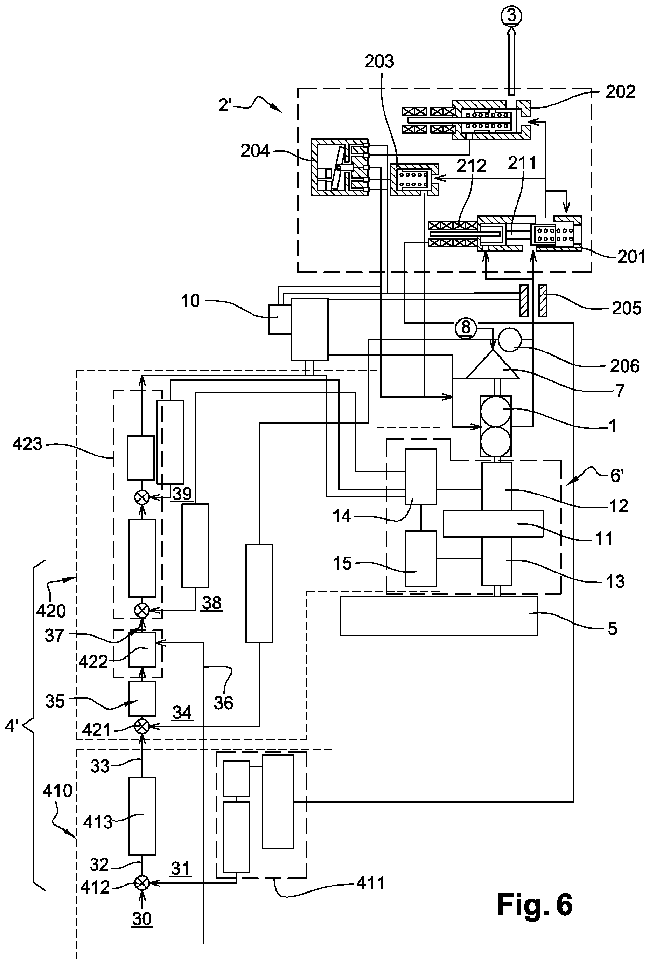

Ici, en référence aux figures 6, 7 ou 8, le système d'alimentation en carburant comporte un dispositif d'entraînement 6' entre le boîtier de relais d'accessoires 5 et la pompe 1 différent de celui du système de la figure 1. La pompe 1 peut être de même nature que pour la solution classique. C'est une pompe volumétrique rotative, dont le débit est une fonction croissante de la vitesse de rotation ω1, apte à fournir le débit nécessaire à l'injection dans la chambre de combustion 3 et à mettre le circuit carburant en pression. De préférence, elle a une caractéristique linéaire Cyl reliant le débit de sortie à la vitesse de rotation ω1.

Tout d'abord, nous allons montrer qu'il existe au moins une solution pour réaliser un dispositif d'entraînement 6' capable de faire varier le rapport entre la vitesse de rotation de l'arbre du boîtier de relais d'accessoires 5 et la vitesse de rotation de l'arbre de la pompe 1, afin de pouvoir adapter le régime de la pompe 1 aux différents points de fonctionnement de la turbomachine.

Le dispositif d'entraînement 6' représenté comporte un réducteur à train épicycloïdal dont on utilise les propriétés pour adapter la vitesse de rotation de la pompe 1 au besoin de débit de carburant suivant les différents régimes de fonctionnement de la turbomachine.

En référence, à la figure 4, le réducteur à train épicycloïdal 11 comporte :

- un planétaire central 11A, agencé pour pouvoir tourner autour de l'axe du train à une vitesse ωA ;
- des satellites 11S s'engrenant avec le planétaire central 11A et portés par un porte-satellites 11U, le porte-satellites 11U étant agencé pour pouvoir tourner autour de l'axe du train à une vitesse ωU ;
- Une couronne 11B externe avec laquelle les satellites 11S s'engrènent également, la couronne 11B étant agencée pour pouvoir tourner autour de l'axe du train à une vitesse ωB.

Une caractéristique du réducteur à train épicycloïdal 11 est donc que ses trois éléments, le planétaire central 11A, le porte-satellites 11U et la couronne 11B, sont capables de tourner. Ici, par exemple, la couronne 11B est libre de tourner à l'intérieur d'un carter fixe 11C protégeant le réducteur 11.

Le fonctionnement du train du réducteur 11 est régi par la formule de Willis qui montre qu'il s'agit d'un mécanisme à deux degrés de liberté et que la connaissance des vitesses de rotation de deux éléments parmi le planétaire central 11A, le porte-satellites 11U et la couronne 11B, permet le calcul de la vitesse de rotation du troisième.

Rotation du planétaire central 11A : ωA

Rotation du porte-satellites 11U : ωU

Rotation de la couronne 11B : ωB

$$\text{Formule de WILLIS : } (\omega A - \omega U) / (\omega B - \omega U) = k \text{ ou } \omega A - k^* \omega B + (k-1)^* \omega U = 0$$

Dans la formule de Willis, le facteur k, aussi appelé raison du train, est une constante déterminée par la géométrie des engrenages. Pour le réducteur 11 de la figure 4, k = - ZB/ZA, où ZA est le nombre de dents du planétaire central A et ZB le nombre de dents de la couronne B. Le facteur k est donc négatif avec un module inférieur à 1.

On comprend donc que, si l'arbre de sortie du boîtier de relais d'accessoires 5 est couplé à l'un des trois éléments et l'arbre de la pompe 1 est couplé à un deuxième élément, on peut faire varier la vitesse de rotation de la pompe 1 pour une vitesse donnée de l'arbre du boîtier 5 en faisant varier la vitesse de rotation du troisième élément.

Un premier moteur électrique 12 est couplé audit troisième élément pour piloter la vitesse de rotation de ce dernier.

Six combinaisons sont possibles pour positionner les trois équipements, boîtier de relais d'accessoires 5, pompe 1 et moteur électrique 12, par rapport aux trois éléments du réducteur à train épicycloïdal 11.

On couple également un second moteur 13 à l'un des éléments du réducteur 11 qui n'est pas relié au premier moteur 12. La position du second moteur 13 multiplie par deux le nombre de combinaisons possibles pour le dispositif d'entraînement 6'. On obtient ainsi douze combinaisons répertoriées dans le tableau ci-dessous.

Ce tableau indique également la fonction donnant la vitesse ω1 de la pompe 1 à partir de la vitesse ω5 de l'arbre du boîtier 5 et de la vitesse ω12 du premier moteur 12. La vitesse de rotation ω13 du second moteur 13 est déterminée par la vitesse de rotation de l'équipement avec lequel il couplé en série sur le réducteur 11, soit l'arbre de la pompe 1, soit l'arbre de sortie du boîtier 5. Dans ce tableau, l'option 1 correspond aux cas où le second moteur 13 est couplé en série avec la pompe 1 sur le même élément du réducteur 11, et l'option 2 correspond aux cas où le second moteur 13 est couplé en série avec l'arbre de sortie du boîtier 5 de relais d'accessoires sur le même élément du réducteur 11.

Tableau 1.

| Liaison Boîtier/Pompe/ Premier moteur | | | Vitesse pompe | Liaison second moteur | |
|---|---|---|---|---|---|
| Boîtier 5 relié au porte-satellites 11 U | | | | Option 1 | Option 2 |
| | Moteur 12 | Pompe 1 | | | |
| 1 A | couronne 11B | planétaire 11A | $\omega 1 = (1-k)^*\omega 5 + k^*\omega 12$ | planétaire A | porte-satellites 11U |
| 1 B | planétaire 11A | couronne 11B | $\omega 1 = -\omega 5^*(1-k)/k + \omega 12/k$ | couronne B | porte-satellites 11U |
| Boîtier 5 relié à la couronne 11 B | | | | Option 1 | Option 2 |
| | Moteur 12 | Pompe 1 | | | |
| 2 A | porte-satellites 11U | planétaire 11A | $\omega 1 = k^*\omega 5 +(1-k)^*\omega 12$ | planétaire A | couronne B |
| 2 B | planétaire 11A | porte-satellites 11U | $\omega 1 = -\omega 5^*k/(1-k) + w12/(1-k)$ | porte-satellites 11U | couronne B |
| Boîtier 5 relié au planétaire 11A | | | | Option 1 | Option 2 |
| | Moteur 12 | Pompe 1 | | | |
| 3 A | couronne 11 B | porte-satellites 11U | $\omega 1 = \omega 5/(1-k) - \omega 12^*k/(1-k)$ | porte-satellites 11U | planétaire A |
| 3 B | porte-satellites 11U | couronne 11 B | $\omega 1 = \omega 5/k - \omega 12^*(1-k)/k$ | couronne B | planétaire A |

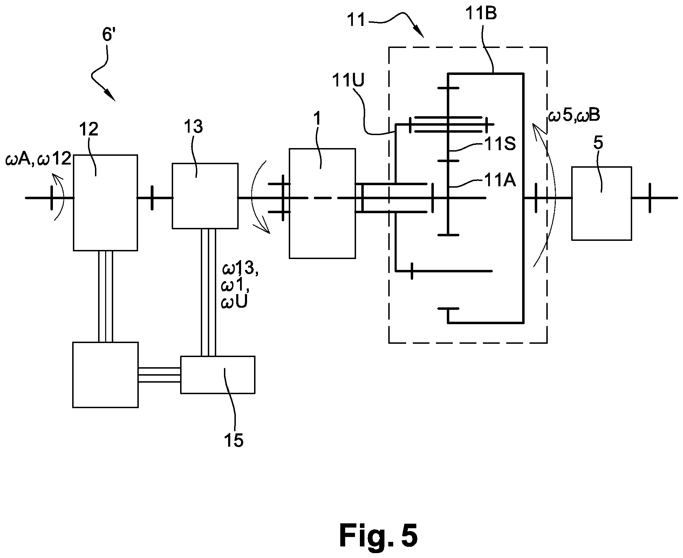

Sur l'exemple illustré en figure 5, correspondant à la configuration « 2B-Option1 », le boîtier 5 est relié à la couronne 11B, la pompe 1 est reliée au porte-satellites 11U, le premier moteur électrique 12 est relié au planétaire central 11A, et le second moteur 13 est relié au porte-satellites 11U.

Le premier moteur 12 et le second moteur 13 comportent chacun un stator et un rotor. Lesdits moteurs 12, 13 sont pilotables en couple appliqué sur leur rotor et en vitesse de rotation $\omega 12$, $\omega 13$ de leur rotor. Il s'agit par exemple de moteurs asynchrones en courant alternatif. Le couple et la vitesse de chaque moteur 12, 13 sont alors pilotés par la puissance électrique et la fréquence du courant envoyé par un convertisseur 14, 15 dédié à chacun.

Par ailleurs, le second moteur 13 est électriquement lié au premier moteur 12 par l'intermédiaire desdits convertisseurs de tension réversibles 14, 15, afin de faire passer de la puissance de l'un à l'autre.

Par ailleurs, en référence aux figures 6, 7 ou 8 , le système d'alimentation en carburant diffère également de celui de la figure 1 en ce qu'une électronique de commande 4' ou 4" est reliée au convertisseur 14, pour piloter la vitesse $\omega 12$ et le couple du premier moteur 12 en vue d'adapter la vitesse $\omega 1$ de la pompe 1. En général, le convertisseur 15 est asservi au convertisseur 14 pour piloter le couple du second moteur 13 en vue de gérer le transfert de puissance entre les deux moteurs.

L'étude du réducteur 11 montre que le couple CA s'exerçant sur le planétaire 11A, le couple CB s'exerçant sur la couronne 11B et le couple CU s'exerçant sur le porte-satellites 11U sont reliés par deux relations :

$$CA + CB + CU = 0 \quad \text{(équilibre du train)}$$

$$\omega A\ ^*CA + \omega B\ ^*CB + \omega U\ ^*CU = 0 \quad \text{(équilibre dynamique)}$$

Compte tenu des relations liant les vitesses de rotation de ces éléments, cela permet de calculer les couples s'exerçant sur deux éléments du réducteur 11 connaissant le troisième.

Le second moteur 13, étant mis en série avec la pompe 1 ou le boîtier 5, voit sa vitesse de rotation déterminée comme étant égale à celle de cet équipement.

On comprend cependant qu'il apporte un degré de liberté supplémentaire au système suivant le couple qu'il exerce et qui vient s'ajouter à celui de la pompe 1 ou du boîtier sur l'élément correspondant du réducteur 11.

Ce degré de liberté supplémentaire peut être utilisé pour assurer un transfert de puissance avec le premier moteur : soit fournir de la puissance lorsque le premier moteur 12 intervient pour accélérer la pompe1 par rapport à l'entraînement du boîtier 5, soit absorber de la puissance lorsque le premier moteur 12 intervient pour freiner la pompe1.

Il est possible d'utiliser d'autres configurations que celle illustrée sur la figure 5. Le choix dépend des caractéristiques de fonctionnement de la turbomachine. Le choix des paramètres du dispositif que sont le facteur k du réducteur 11 du train épicycloïdal 11, le rapport de la vitesse de rotation $\omega 5$ en sortie du boîtier 5 par rapport à la vitesse de rotation de l'axe de la turbine, la caractéristique linéaire Cyl de la pompe 1, et le choix parmi les configurations 1A à 3B, doivent être faits pour atteindre en particulier les objectifs suivants :

- permettre à la pompe 1 de tourner à une vitesse $\omega 1$ qui s'ajuste pour fournir un débit Cyl*$\omega 1$ qui correspond au besoin F1, tel que représenté par exemple dans la figure 2, lorsque la vitesse de rotation de l'axe de la turbine varie entre ses valeurs minimale $\omega min$ et maximale $\omega max$ ;
- minimiser la puissance dépensée dans le moteur 12 pour ajuster la vitesse $\omega 1$ de la pompe 1 sur la plage de fonctionnement de la turbomachine.

Par ailleurs, les contraintes technologiques sur les équipements utilisés impliquent généralement que la vitesse $\omega 1$ de la pompe 1 doit être supérieure à celle $\omega 5$ de l'arbre de sortie du boîtier de relais d'accessoires 5.

Ce concept avec deux moteurs électriques auxiliaires pour le système d'entraînement entre le boîtier de relais d'accessoires 5 et la pompe 1 est très innovant car il offre les avantages suivants :

- Prélèvement sur le boîtier de relais d'accessoires 5 uniquement de la puissance mécanique correspondant au besoin de puissance pour l'alimentation des géométries variables (besoin en pression) et pour l'alimentation en débit carburant (besoin en débit carburant),
- réduction de la cylindrée de la pompe 1,
- réduction drastique du dimensionnement de la boucle de recirculation du débit pompe,
- simplification de l'architecture du groupe hydromécanique 2 de régulation du carburant,
- aucun besoin en puissance externe lors du pilotage de la vitesse de la pompe par un moteur 12 grâce au transfert de puissance entre ce moteur et le second moteur 13.

Dans le système décrit dans ce qui précède, le premier moteur 12 et le second moteur 13 sont des équipements spécialement dédiés, ajoutés pour faire fonctionner le dispositif d'entraînement 6'. On peut, dans une variante, utiliser le démarreur de la turbomachine pour faire office de premier ou de second moteur du dispositif.

De plus, selon l'invention, les convertisseurs 14, 15 et les moteurs 12, 13 du dispositif d'entraînement 6' sont avantageusement conçus avec un dimensionnement et une puissance électrique suffisants pour réagir avec un temps très faible, de l'ordre du centième de seconde.

Le concept de système d'alimentation en carburant développé dans la suite permet une utilisation optimale d'un tel dispositif d'entraînement 6'.

Nous allons maintenant décrire plusieurs modes de réalisations de l'ensemble du système d'alimentation en carburant agencé pour exploiter au mieux la capacité du dispositif d'entraînement 6' à adapter la vitesse de la pompe 1.

En référence à la figure 6, un premier mode de réalisation du système d'alimentation en carburant selon l'invention, comprend :

- un dispositif d'entraînement 6' entre le boîtier de relais d'accessoire 5 et la pompe 1 tel que décrit précédemment, permettant d'adapter le régime de la pompe 1 ;
- une pompe 1 dimensionnée pour être adaptée au débit fourni avec le système selon l'invention ;
- un moyen d'alimentation 7 du circuit à partir des réservoirs de carburant 8 ;
- un groupe hydromécanique 2' adapté ;
- une électronique de commande 4'.

Ici, le système d'alimentation en carburant est également connecté à des actionneurs de géométries variables 10.

Le groupe hydromécanique 2' pour ce mode de réalisation comporte les éléments suivants :

- un capteur de débit 201 de carburant entre la pompe 1 et l'injection vers la chambre de combustion 3 ;
- un clapet de pressurisation 202 au niveau de l'injection vers la chambre de combustion 3;
- un clapet de retour 203 placé en dérivation entre le capteur de débit 201 et le clapet de pressurisation 202 ;
- une servovalve 204 commandant essentiellement le clapet de pressurisation 202 et le clapet de retour 203.

Dans un mode de réalisation préféré, le capteur de débit 201 est réalisé par un doseur modifié. Un doseur généralement utilisé dans un circuit classique comprend un tiroir coulissant 211 dont la position commande le débit passant par le doseur. De plus, un capteur 212 de la position du tiroir permet d'asservir le doseur, classiquement par une servovalve. Ici, la position du tiroir n'est pas pilotée par une servovalve mais directement par la différence de pression aux bornes du doseur, à l'instar du pilotage de la soupape régulatrice de la solution classique. Connaissant la caractéristique de ce doseur, la position lue par le capteur de position du tiroir 211 fournit l'information du débit réellement injecté par la pompe 1.

Le bloc hydromécanique 2' perd donc sa fonction de régulation du débit mais assure une fonction de capteur de débit. Il conserve les fonctions de coupure du carburant et de pressurisation du système.

Le clapet de pressurisation 202 permet d'assurer la pression minimale pour le bon fonctionnement des géométries variables, ainsi que la coupure du débit injecté.

Le clapet de retour 203, permet d'assurer l'échappement du débit délivré par la pompe 1 afin de ne pas monter en pression dans le circuit, lors de l'activation de cette coupure par la servovalve 204.

Le circuit de carburant selon l'invention comprend en plus :

- une dérivation 205 pour alimenter une boucle de commande des actionneurs des géométries variables 10 ; cette dérivation 205 est ici placée entre la pompe 1 et le capteur de débit 201 du groupe hydromécanique 2' ;
- un capteur de pression 206, placé en sortie de la pompe 1 et avant la dérivation 205.

Le capteur de pression 206 est capable de fournir des mesures rapides, typiquement avec un échantillonnage de l'ordre de 100Hz, pour réagir aux variations de pression rapides provenant notamment de l'actionnement des géométries variables.

L'électronique de commande 4' comporte une première boucle de débit 410 (ci-après nommée boucle de débit 410), qui utilise une consigne de débit 30 venant du calculateur de la turbomachine, non représenté, et le débit mesuré grâce au capteur de débit 201. Un module 411 de la boucle de débit 410 exploite les informations du capteur de débit 201 pour calculer un débit mesuré 31 après la dérivation 205. Un comparateur 412 calcule un écart 32 entre le débit mesuré et la consigne de débit 30. A partir l'écart de débit 32, un module 413 calcule une consigne de pression 33 à obtenir en sortie de la pompe 1, connaissant les caractéristiques de la pompe 1 et du circuit hydraulique. Cette boucle de débit 410 de l'électronique de commande peut être intégrée dans le calculateur embarqué (FADEC) de la turbomachine, non représenté. Cette boucle de débit 410 n'est avantageusement pas rapide.

Ici, l'électronique de commande 4' comporte une deuxième boucle de pression 420 (ci-après nommée boucle de pression 420) qui utilise la consigne de pression 33 venant de la boucle de débit 410 et la mesure de pression 34 fournie par le capteur de pression 206 et qui pilote le dispositif d'entraînement 6' afin d'obtenir la bonne vitesse de pompe 1. Le temps de réaction de la boucle de débit 410 risque d'être trop important pour réagir aux impacts des appels de débit sur la ligne d'injection, c'est la raison pour laquelle l'électronique de commande comporte, sur cet exemple, une deuxième boucle de régulation locale en pression 420, plus rapide.

La boucle de pression 420 commence par un comparateur 421 qui établit un écart 35 entre la consigne de pression 33 élaborée par la boucle de débit 410 et la mesure de pression 34 fournie par le capteur 206, avantageusement avec un échantillonnage de l'ordre de 100Hz.

Ici, avec un dispositif d'entraînement 6' avec transfert de puissance entre deux moteurs, cette boucle de pression 420 pilote le premier moteur 12 en vitesse et en couple pour corriger la vitesse de la pompe 1.

Un premier module 422 élabore une consigne de vitesse 37 du premier moteur 12 à partir de l'écart de pression 35 et de la consigne 36 de vitesse de pompe. La consigne 36 de vitesse de pompe correspondant à la consigne de débit 30 peut être fournie par le calculateur de la turbomachine, connaissant les caractéristiques de la pompe 1 et du circuit hydraulique. L'écart de pression 35 indique si cette vitesse doit être rapidement corrigée en fonction de perturbations telles que l'actionnement des géométries variables 10. Un écart 35 qui diminue en valeur algébrique, pour une pression 34 qui diminue, indique que le débit est insuffisant, donc qu'il faut augmenter la vitesse de rotation de la pompe, et inversement, si la pression 34 augmente par rapport à la consigne de pression 33.

Ensuite, un deuxième module 423 établit successivement des corrections de vitesse et de couple du premier moteur 12 en utilisant la consigne de vitesse, avec une rétroaction sur une mesure de vitesse 38 et une mesure de couple 39 sur ce premier moteur 12.

L'électronique de commande de la boucle de pression 420 doit être rapide pour réagir immédiatement aux variations de pression détectées par le capteur 206, typiquement à une cadence de 100Hz. De préférence, par exemple les échantillonnages des mesures de vitesse 38 et de couple 39 sont respectivement de l'ordre de 200Hz et 1000Hz. De préférence, la boucle de pression 420 est donc mise en œuvre par un boîtier électronique dédié, avec une électronique rapide.

Cette boucle de pression 420 pilotant le dispositif d'entraînement 6' à partir des informations de pression permet une réactivité forte du dispositif d'entraînement 6' pour adapter la vitesse de la pompe 1, en particulier lors de l'actionnement des géométries variables 10.

Lors d'un appel de débit lié à la commande des géométries variables 10, la pression 34 mesurée par le capteur de pression 206 ne dépend plus uniquement du circuit d'injection, mais également des charges des géométries variables 10.

La pression varie alors brusquement dans le circuit de carburant, au niveau de la dérivation 205. Cette chute de la pression 34, mesurée par le capteur 206, est compensée par l'augmentation de vitesse de la pompe 1, pilotée par la boucle de pression 420 de l'électronique de commande 4'.

La consigne de commande du moteur 12 est corrigée rapidement suivant l'écart 35 de la consigne de pression 33 et de la mesure de pression 34 en sortie pompe 1. Cette consigne de commande sur le moteur de pilotage 12 permet d'augmenter la vitesse de la pompe et le débit de carburant.

Pour réaliser cette correction, le dimensionnement de la puissance des moteurs 12 et 13 dépend de préférence des dynamiques souhaitées.

A l'allumage de la turbomachine, la pompe 1 est entraînée à une vitesse de rotation minimale. Une partie du débit traverse le capteur 201 et est recirculée par le clapet de retour 203.

La vitesse de la pompe 1 est ensuite adaptée pour atteindre la bonne consigne de débit d'allumage. La servovalve 204 est alors activée, ce qui entraîne l'ouverture du clapet de pressurisation 202, la fermeture du clapet de retour 203 et donc permet l'injection du débit d'allumage vers la chambre de combustion 3.

Cette architecture est très avantageuse car elle permet de ne plus avoir de boucle de recirculation, de réduire la taille du groupe hydromécanique 2' et de répondre rapidement à des appels de débit grâce à la commande du dispositif d'entraînement 6' par la boucle de pression 420 sur l'écart de pression 35.

Il n'y a donc plus besoin de dimensionner une boucle de recirculation pour dissiper un surplus de débit important et cela permet de gagner en puissance prélevée sur le boîtier de relais d'accessoires 5 pour l'alimentation en carburant. Cela permet également de supprimer la soupape régulatrice qui existe dans un circuit classique.

Dans une étude préliminaire réalisée en se basant sur un type particulier d'application, où chaque point de fonctionnement est décrit en termes de vitesse du boîtier 5, de débit injecté, de débit de refroidissement des géométries variables 10, de fuites internes, de débit nécessaire au déplacement des géométries variables et de pression d'injection, les inventeurs ont ainsi constaté un gain significatif de puissance nécessaire pour réaliser l'injection, que ce soit avec ou sans alimentation hydraulique des géométries variables.

Ce concept a aussi d'autres impacts positifs.

En ce qui concerne la pompe volumétrique 1, sa cylindrée peut être diminuée d'au moins un tiers par rapport à une solution classique. Il y a aussi un gain d'encombrement lié à la diminution du diamètre des pignons et un gain de masse.

En ce qui concerne le bloc hydromécanique 2', on note une simplification et des gains de masse liés à la disparition d'une servovalve, au remplacement d'une soupape régulatrice par un clapet de retour et à la possibilité de suppression d'un électro-robinet.

Le concept peut aussi permettre une diminution de la taille des échangeurs thermiques.

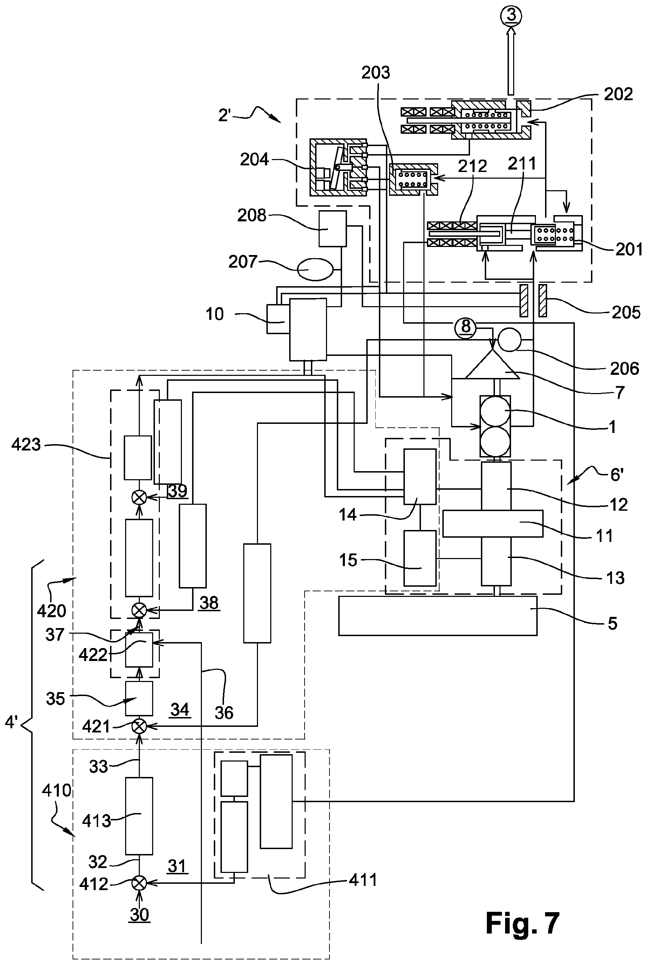

Dans une variante de ce premier mode de réalisation, en référence à la figure 7, le système d'alimentation conserve les éléments déjà décrits mais un accumulateur hydraulique 207 est installé sur la boucle hydraulique de commande des géométries variables 10, entre leurs actionneurs et la dérivation 205.

De préférence, pour ne pas initier dans le circuit de carburant des retards de dosage, dû au gonflement ou au dégonflement de cet accumulateur 207, celui-ci fonctionne à pression constante. Pour cela, un régulateur de pression 208 est installé de manière à toujours avoir une différence de pression constante aux bornes des géométries variables 10.

L'installation de l'accumulateur hydraulique 207 forme des moyens de temporisation hydrauliques qui permettent ici de limiter la puissance d'appel au niveau des moteurs électriques, 12, 13 dans le dispositif d'entraînement. D'une manière générale, il limite les contraintes de dimensionnement du dispositif d'entraînement 6' liées à la réactivité.

Comme dans l'architecture précédente, lors d'un appel de débit lié à la commande des géométries variables 10, la consigne de commande du moteur 12 du dispositif d'entraînement 6' sera alors corrigée rapidement suivant l'écart de pression 35 déduit de la consigne de pression 33 et de la mesure de pression 34 par le capteur 206 en sortie de la pompe 1.

Cette solution reste sans boucle de recirculation, permettant d'optimiser les réjections thermiques du circuit de carburant.

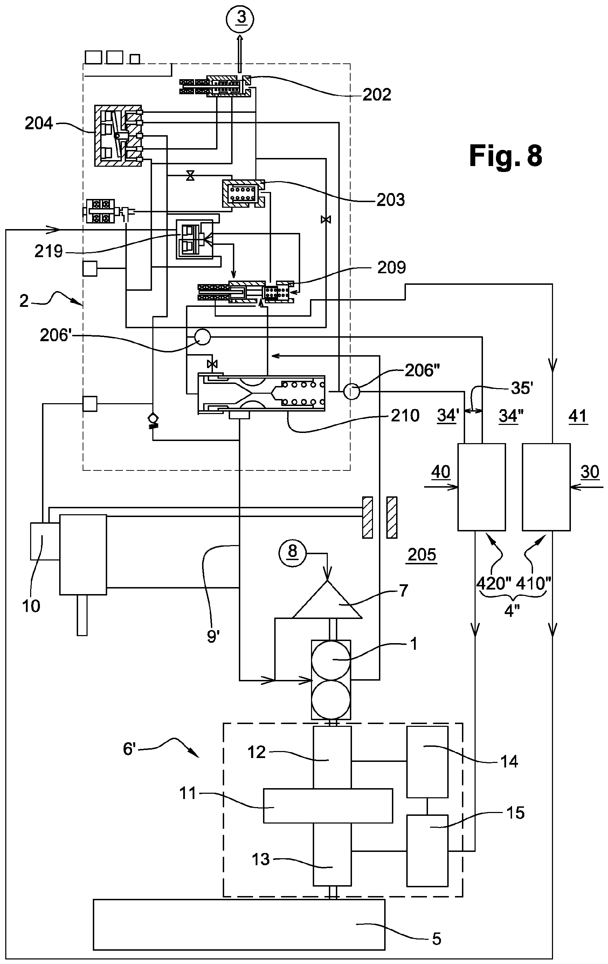

Dans un deuxième mode de réalisation de l'invention, en référence à la figure 8, on conserve un groupe hydromécanique 2, semblable à celui de la solution classique, et une boucle de recirculation 9'.

Dans ce cas, le système d'alimentation en carburant selon l'invention, comprend toujours :

- un dispositif d'entraînement 6' entre le boîtier de relais d'accessoire 5 et la pompe 1 tel que décrit précédemment, permettant d'adapter le régime de la pompe 1 ;
- une pompe 1 dimensionnée pour être adaptée au débit fourni avec le système selon l'invention ;

- un moyen d'alimentation 7 du circuit à partir des réservoirs de carburant 8.

Le système d'alimentation en carburant est également connecté à des actionneurs de géométries variables 10. Le circuit de carburant selon l'invention comprend une dérivation 205 pour alimenter une boucle de commande des actionneurs des géométries variables 10, cette dérivation 205 est ici placée entre la pompe 1 et le groupe hydromécanique 2.

Le groupe hydromécanique 2 pour ce mode de réalisation comporte les éléments suivants :

- un clapet de pressurisation 202 au niveau de l'injection vers la chambre de combustion 3;
- un clapet de retour 203 placé en dérivation entre un doseur 209 et le clapet de pressurisation 202, et branché vers la boucle de recirculation 9' ;
- une servovalve 204 commandant essentiellement le clapet de pressurisation 202 et le clapet de retour 203 ;
- un doseur 209 de carburant entre la pompe 1 et l'injection vers la chambre de combustion 3, et sa servovalve de commande 219 (ou servovalve de pilotage 219) pour respecter une consigne de débit 30 ;
- une soupape régulatrice 210 fonctionnant pour recirculer le débit de carburant et agencée pour être pilotée hydrauliquement par la différence de pression aux bornes du doseur 209 afin de maintenir une différence de pression 35' aux bornes de la soupape régulatrice 210 constante et égale à une pression de référence constante 40.

En plus, le système d'alimentation en carburant comprend des moyens de mesure 206', 206" de la différence de pression 35' aux bornes de la soupape régulatrice 210.

Plus précisément, le système d'alimentation en carburant comprend deux capteurs 206' et 206" installés dans le circuit de carburant aux bornes de la soupape régulatrice 210, les pressions 34' et 34" indiquées par ces capteurs 206' et 206" permettent de mesurer la différence de pression 35'.

Le système d'alimentation en carburant comprend en outre une électronique de commande 4" qui est ici différente de celle du premier mode de réalisation. En effet le fonctionnement du système est différent.

Tel qu'illustré sur la figure 8, plus précisément, l'électronique de commande 4" comprend une première boucle de débit 410" (ci-après nommée boucle de débit 410") et une seconde boucle de pression 420" (ci-après nommée boucle de pression 420") montées en parallèle l'une de l'autre, et autrement dit les boucles de débit et de pression 410", 420" sont indépendantes l'une de l'autre.

La boucle de débit 410" utilise une consigne de débit 30 venant du calculateur de la turbomachine (FADEC) et un débit mesuré 41 grâce au doseur 209 pour piloter la servovalve de commande 219 (et plus précisément le courant de la servovalve de commande 219). La boucle de débit 410" permet de réguler le débit de carburant injecté dans la chambre de combustion 3.

La boucle de pression 420" utilise la différence de pression 35' aux bornes de la soupape régulatrice 210 et la pression de référence constante 40 pour piloter le dispositif d'entraînement 6', et ainsi adapter le débit fourni par la pompe 1.

Avantageusement, les capteurs 206', 206" fonctionnent avec un échantillonnage rapide pour permettre à la boucle de pression 420" de réagir rapidement sur le dispositif d'entraînement 6'.

Dans la boucle de pression 420", la différence de pression 35' aux bornes de la soupape régulatrice 210 est comparée à la pression de référence constante 40. L'écart entre la différence de pression 35' et la pression de référence 40 permet de générer une commande au niveau du dispositif d'entraînement 6'.

Autrement dit, c'est la différence de pression 35' entre les pressions 34', 34" mesurées par les capteurs 206', 206" qui indique qu'une adaptation rapide du débit est à faire, si cette différence de pression 35' s'écarte de la pression de référence constante 40. La boucle de pression 420" est donc adaptée pour corriger rapidement la vitesse de la pompe 1 via le dispositif d'entraînement 6'.

Lors d'un appel des géométries variables 10, la soupape régulatrice 210 se ferme pour compenser la diminution de débit à l'entrée du groupe hydromécanique 2. Le fait que le débit circulant dans la boucle de recirculation 9' est faible engendre un écart de la différence de pression 35' par rapport à la pression de référence constante 40 malgré l'asservissement de la soupape régulatrice 210 par le doseur 209, ce qui permet de piloter le dispositif d'entraînement 6'.

Autrement dit, si la boucle de recirculation minimale existante 9' ne peut compenser les appels de débit des géométries variables 10, la fermeture totale de la soupape régulatrice 210 ne pourra pas garantir une différence de pression 35' à ses bornes égale à la pression de référence constante 40 et une commande sera générée vers le dispositif d'entraînement 6'.

En comparaison à l'art antérieur, le débit dans la boucle de recirculation 9' est minimisé, ainsi lors d'un actionnement des géométries variables 10, il existe toujours un écart entre la différence de pression 35' aux bornes de la soupape régulatrice 210 et la pression de référence constante 40, cet écart étant utilisé pour générer une commande au niveau du dispositif d'entraînement 6'.

La mesure de la différence de pression 35' aux bornes de la soupape régulatrice 210 comparée par rapport à la pression de référence constante 40 permet à la boucle de pression 420" de corriger en conséquence la consigne de vitesse du moteur 12 du dispositif d'entraînement 6' de la pompe 1.

La soupape régulatrice 210 n'est dimensionnée que pour fournir un faible pourcentage du débit nécessaire à l'actionnement des géométries variables 10 de manière un induire un écart de pression entre la différence de pression 35' et la pression de référence constante 40.

Cette solution permet d'adapter la solution de commande en vitesse sur une installation avec une boucle de débit existante.

Le système d'alimentation en carburant illustré sur la figure 8 requiert l'utilisation d'une boucle de recirculation minimale 9'. Toutefois en comparaison à l'art antérieur, un tel système d'alimentation permet de réduire significativement la puissance prélevée sur la turbomachine ainsi que les réjections thermiques.

**Revendications**

1. Système d'alimentation en carburant d'une turbomachine, comportant un circuit de carburant comportant :

   - une pompe (1) agencée pour envoyer dans ledit circuit de carburant un débit de carburant qui est une fonction croissante de la vitesse de rotation d'un arbre de ladite pompe ;
   - un groupe hydromécanique (2') agencé pour commander une sortie de carburant vers une chambre de combustion (3) ;
   - un dispositif d'entraînement (6') agencé pour entraîner l'arbre de la pompe (1) avec une vitesse de rotation commandable ;
   - une branche comportant des actionneurs pour commander des géométries variables (10) de la turbomachine, ladite branche démarrant par un piquage sur une dérivation (205) placée entre la sortie de la pompe (1) et ledit groupe hydromécanique (2') ;

   le système étant configuré pour réguler un débit de carburant vers ladite chambre de combustion (3) à partir d'une consigne de débit (30), **caractérisé en ce que** ledit système d'alimentation comporte en outre :

   - un capteur de débit (201) placé dans le groupe hydromécanique (2') ;
   - une boucle de débit (410) agencée pour déterminer une consigne de pression (33) en sortie de la pompe (1) en fonction de la consigne de débit (30) et d'une mesure (31) fournie par ledit capteur de débit (201) ;
   - un capteur de pression (206) placé dans le circuit de carburant à la sortie de la pompe (1) ;
   - une boucle de pression (420) agencée pour commander la vitesse du dispositif d'entraînement (6') à partir d'un écart (35) entre une mesure de pression (34) fournie par le capteur de pression (206) et ladite consigne de pression (33), de manière à adapter rapidement le débit fourni par la pompe à la consigne de débit (30).

2. Système d'alimentation selon la revendication 1, dans lequel des moyens de temporisation hydrauliques (207) sont placés dans le circuit de carburant, entre la dérivation (205) et les actionneurs des géométries variables (10) afin de minimiser la puissance électrique requise par le dispositif d'entraînement (6').

3. Système d'alimentation en carburant d'une turbomachine, comportant un circuit de carburant comportant :

   - une pompe (1) agencée pour envoyer dans ledit circuit de carburant un débit de carburant qui est une fonction croissante de la vitesse de rotation d'un arbre de ladite pompe ;
   - un groupe hydromécanique (2) agencé pour commander une sortie de carburant vers une chambre de combustion (3) ;
   - un dispositif d'entraînement (6') agencé pour entraîner l'arbre de la pompe (1) avec une vitesse de rotation commandable ;
   - une branche comportant des actionneurs pour commander des géométries variables (10) de la turbomachine, ladite branche démarrant par un piquage sur une dérivation (205) placée entre la sortie de la pompe (1) et ledit groupe hydromécanique (2) ;

   le système étant configuré pour réguler un débit de carburant vers ladite chambre de combustion (3) à partir d'une consigne de débit (30), **caractérisé en ce que** ledit système d'alimentation comporte en outre :

   - un doseur (209) placé dans le groupe hydromécanique (2) agencé pour envoyer un débit égal à la consigne de débit (30) vers la sortie (3) du circuit de carburant ;

- une soupape régulatrice (210) agencée pour être pilotée hydrauliquement par une différence de pression aux bornes du doseur (209) afin de maintenir une différence de pression (35') aux bornes de la soupape régulatrice (210) constante et égale à une pression de référence constante (40) ;
- des moyens de mesure (206', 206") de ladite différence de pression (35') aux bornes de la soupape régulatrice (210) ;
- une boucle de débit (410") agencée pour commander le courant d'une servovalve de pilotage (219) du doseur (209) à partir de la consigne de débit (30) et d'un débit mesuré (41) via le doseur (209) ;
- une boucle de pression (420") agencée pour commander la vitesse du dispositif d'entraînement (6') à partir d'un écart de ladite différence de pression (35') aux bornes de la soupape régulatrice (210) par rapport à la pression de référence constante (40), de manière à adapter rapidement le débit fourni par la pompe (1) à la consigne de débit (30), notamment lors d'un actionnement desdites géométries variables (10).

4. Système d'alimentation selon l'une des revendications précédentes, dans lequel le dispositif d'entraînement (6') est destiné à entraîner la pompe (1) à partir d'un axe moteur (26) de ladite turbomachine et comporte un réducteur (11) à train épicycloïdal comprenant trois éléments, un planétaire (11A) central, une couronne (11B) externe et un porte-satellites (11U) dont les satellites (11 S) s'engrènent avec le planétaire et la couronne, un premier des trois éléments étant destiné à être relié à l'axe moteur (26) et un second des trois éléments étant couplé à l'arbre de la pompe (1), ledit dispositif d'entraînement (6') étant **caractérisé en ce que** lesdits trois éléments sont mobiles en rotation autour d'un axe du réducteur, **en ce que** ledit dispositif de transmission comporte en outre au moins des premiers moyens électriques (12) agencés pour entraîner en rotation le troisième desdits éléments du réducteur (11), de manière à modifier un rapport de vitesse de rotation entre le l'axe moteur (26) et l'arbre de la pompe (1).

5. Système d'alimentation selon la revendication précédente, dans lequel le dispositif d'entraînement (6') comporte des seconds moyens électriques (13) couplés au premier ou au second desdits éléments du réducteur (11), les premier et second moyens électriques étant agencés pour transférer de la puissance électrique de manière réversible de l'un à l'autre.

6. Turbomachine comportant un système selon l'une des revendications précédentes.

7. Turbomachine selon la revendication précédente, dans laquelle un boîtier de relais d'accessoires (5) est placé entre un axe moteur (26) et le dispositif d'entraînement (6').

**Patentansprüche**

1. System zur Versorgung einer Turbomaschine mit Kraftstoff, umfassend einen Kraftstoffkreislauf, der umfasst:

- eine Pumpe (1), die eingerichtet ist, um einen Kraftstoffdurchsatz, der eine steigende Funktion der Drehzahl einer Welle der Pumpe ist, in den Kraftstoffkreislauf zu leiten;
- eine hydromechanische Gruppe (2'), die eingerichtet ist, um einen Kraftstoffausgang zu einer Brennkammer (3) zu steuern;
- eine Antriebsvorrichtung (6'), die eingerichtet ist, um die Welle der Pumpe (1) mit einer steuerbaren Drehzahl anzutreiben;
- einen Zweig, der Aktuatoren umfasst, um variable Geometrien (10) der Turbomaschine zu steuern, wobei der Zweig mit einer Zweigverbindung an einer Ableitung (205) beginnt, die zwischen dem Ausgang der Pumpe (1) und der hydromechanischen Gruppe (2') angebracht ist;

wobei das System konfiguriert ist, um einen Kraftstoffdurchsatz zur Brennkammer (3) ausgehend von einem Solldurchsatz (30) zu regeln, **dadurch gekennzeichnet, dass** das System zur Versorgung weiter umfasst:

- einen Durchsatzsensor (201), der in der hydromechanischen Gruppe (2') angebracht ist;
- eine Durchsatzschleife (410), die eingerichtet ist, um einen Solldruck (33) am Ausgang der Pumpe (1) in Abhängigkeit von dem Solldurchsatz (30) und einer von dem Durchsatzsensor (201) gelieferten Messung (31) zu bestimmen;
- einen Drucksensor (206), der im Kraftstoffkreislauf am Ausgang der Pumpe (1) angebracht ist;
- eine Druckschleife (420), die eingerichtet ist, um die Geschwindigkeit der Antriebsvorrichtung (6') ausgehend von einer Abweichung (35) zwischen einer von dem Drucksensor (206) gelieferten Druckmessung (34) und dem Solldruck (33) zu steuern, sodass der von der Pumpe gelieferte Durchsatz schnell an den Solldurchsatz (30) angepasst wird.

2. System zur Versorgung nach Anspruch 1, wobei hydraulische Verzögerungsmittel (207) im Kraftstoffkreislauf zwischen der Ableitung (205) und den Aktuatoren der variablen Geometrien (10) angebracht sind, um die von der Antriebsvorrichtung (6') erforderte elektrische Leistung zu minimieren.

3. System zur Versorgung einer Turbomaschine mit Kraftstoff, umfassend einen Kraftstoffkreislauf, der umfasst:

- eine Pumpe (1), die eingerichtet ist, um einen Kraftstoffdurchsatz, der eine steigende Funktion der Drehzahl einer Welle der Pumpe ist, in den Kraftstoffkreislauf zu leiten;
- eine hydromechanische Gruppe (2), die eingerichtet ist, um einen Kraftstoffausgang zu einer Brennkammer (3) zu steuern;
- eine Antriebsvorrichtung (6'), die eingerichtet ist, um die Welle der Pumpe (1) mit einer steuerbaren Drehzahl anzutreiben;
- einen Zweig, der Aktuatoren umfasst, um variable Geometrien (10) der Turbomaschine zu steuern, wobei der Zweig mit einer Zweigverbindung an einer Ableitung (205) beginnt, die zwischen dem Ausgang der Pumpe (1) und der hydromechanischen Gruppe (2) angebracht ist;

wobei das System konfiguriert ist, um einen Kraftstoffdurchsatz zur Brennkammer (3) ausgehend von einem Solldurchsatz (30) zu regeln, **dadurch gekennzeichnet, dass** das System zur Versorgung weiter umfasst:

- einen in der hydromechanischen Gruppe (2) angebrachten Dosierer (209), der eingerichtet ist, um einen Durchsatz gleich dem Solldurchsatz (30) zum Ausgang (3) des Kraftstoffkreislaufs zu leiten;
- ein Regulierventil (210), das eingerichtet ist, um durch eine Druckdifferenz an den Anschlüssen des Dosierers (209) hydraulisch vorgesteuert zu werden, um an den Anschlüssen des Regulierventils (210) eine Druckdifferenz (35') aufrechtzuerhalten, die konstant und gleich einem konstanten Referenzdruck (40) ist;
- Mittel zum Messen (206', 206") der Druckdifferenz (35') an den Anschlüssen des Regulierventils (210);
- eine Durchsatzschleife (410"), die eingerichtet ist, um den Strom eines Vorsteuerungsservoventils (219) des Dosierers (209) ausgehend von dem Solldurchsatz (30) und einem über den Dosierer (209) gemessenen Durchsatz (41) zu steuern;
- eine Druckschleife (420"), die eingerichtet ist, um die Geschwindigkeit der Antriebsvorrichtung (6') ausgehend von einer Abweichung der Druckdifferenz (35') an den Anschlüssen des Regulierventils (210) in Bezug auf den konstanten Referenzdruck (40) zu steuern, sodass der von der Pumpe (1) gelieferte Durchsatz schnell an den Solldurchsatz (30) angepasst wird, insbesondere während einer Betätigung der variablen Geometrien (10).

4. System zur Versorgung nach einem der vorstehenden Ansprüche, wobei die Antriebsvorrichtung (6') dazu vorgesehen ist, die Pumpe (1) ausgehend von einer Motorachse (26) der Turbomaschine anzutreiben und ein epizyklisches Untersetzungsgetriebe (11) umfasst, das drei Elemente umfasst, ein Sonnenrad (11A), eine äußere Krone (11B) und einen Planetenträger (11U), dessen Planeten (11S) in das Rad und die Krone eingreifen, wobei ein erstes der drei Elemente dazu vorgesehen ist, mit der Motorachse (26) verbunden zu sein und ein zweites der drei Elemente an die Welle der Pumpe (1) gekoppelt ist, wobei die Antriebsvorrichtung (6') **dadurch gekennzeichnet ist, dass** die drei Elemente drehbeweglich um eine Achse des Untersetzungsgetriebes sind und dadurch, dass die Übertragungsvorrichtung weiter mindestens erste elektrische Mittel (12) umfasst, die eingerichtet sind, um das dritte der Elemente des Untersetzungsgetriebes (11) in Drehung zu versetzen, sodass ein Drehzahlverhältnis zwischen der Motorachse (26) und der Welle der Pumpe (1) modifiziert wird.

5. System zur Versorgung nach dem vorstehenden Anspruch, wobei die Antriebsvorrichtung (6') zweite elektrische Mittel (13) umfasst, die an das erste oder das zweite der Elemente des Untersetzungsgetriebes (11) gekoppelt sind, wobei die ersten und zweiten elektrischen Mittel eingerichtet sind, um elektrische Leistung auf reversible Weise vom einen zum anderen zu übertragen.

6. Turbomaschine, umfassend ein System nach einem der vorstehenden Ansprüche.

7. Turbomaschine nach dem vorstehenden Anspruch, wobei ein Zubehörrelaiskasten (5) zwischen einer Motorachse (26) und der Antriebsvorrichtung (6') angebracht ist.

**Claims**

1. A fuel supply system for a turbomachine, comprising a fuel circuit comprising:

    - a pump (1) arranged to send into said fuel circuit a fuel flow rate which is an increasing function of the rotational speed of a shaft of said pump;
    - a hydromechanical group (2') arranged to control a fuel outlet to a combustion chamber (3);
    - a drive device (6') arranged to drive the shaft of the pump (1) with a controllable rotational speed;
    - a branch comprising actuators for controlling variable geometry (10) of the turbomachine, said branch starting with a branch connection on a derivation (205) placed between the outlet of the pump (1) and said hydromechanical group (2');

    the system being configured to regulate a fuel flow rate to said combustion chamber (3) from a flow rate set point value (30), **characterized in that** said supply system further comprises:

    - a flow rate sensor (201) placed in the hydromechanical group (2');
    - a flow rate loop (410) arranged to determine a pressure set point value (33) at the outlet of the pump (1) as a function of the flow rate set point value (30) and a measurement (31) provided by said flow rate sensor (201);
    - a pressure sensor (206) placed in the fuel circuit at the outlet of the pump (1);
    - a pressure loop (420) arranged to control the speed of the drive device (6') from a difference (35) between a pressure measurement (34) provided by the pressure sensor (206) and said pressure set point value (33), so as to quickly adapt the flow rate provided by the pump to the flow rate set point value (30).

2. The fuel supply system according to claim 1, wherein hydraulic delay means (207) are placed in the fuel circuit, between the derivation (205) and the actuators of the variable geometry (10) in order to minimize the electrical power required by the drive device (6').

3. A fuel supply system for a turbomachine, comprising a fuel circuit comprising:

    - a pump (1) arranged to send into said fuel circuit a fuel flow rate which is an increasing function of the rotational speed of a shaft of said pump;
    - a hydromechanical group (2) arranged to control a fuel outlet to a combustion chamber (3);
    - a drive device (6') arranged to drive the shaft of the pump (1) with a controllable rotational speed;
    - a branch comprising actuators for controlling variable geometry (10) of the turbomachine, said branch starting with a branch connection on a derivation (205) placed between the outlet of the pump (1) and said hydromechanical group (2);

    the system being configured to regulate a fuel flow rate to said combustion chamber (3) from a flow rate set point value (30), **characterized in that** said supply system further comprises:

    - a metering unit (209) placed in the hydromechanical group (2) arranged to send a flow rate equal to the flow rate set point value (30) to the outlet (3) of the fuel circuit;
    - a regulating valve (210) arranged to be hydraulically controlled by a pressure difference across the metering unit (209) in order to maintain a constant pressure difference (35') across the regulating valve (210) equal to a constant reference pressure (40);
    - means (206', 206") for measuring said pressure difference (35') across the regulating valve (210);
    - a flow rate loop (410") arranged to control the current of a servo valve (219) for controlling the metering unit (209) from the flow rate set point value (30) and a measured flow rate (41) via the metering unit (209);
    - a pressure loop (420") arranged to control the speed of the drive device (6') from a difference of said pressure difference (35') across the regulating valve (210) with respect to the constant reference pressure (40), so as to quickly adapt the flow rate provided by the pump (1) to the flow rate set point value (30), in particular when actuating said variable geometry (10).

4. The fuel supply system according to one of the preceding claims, wherein the drive device (6') is intended to drive the pump (1) from a drive shaft (26) of said turbomachine and comprises an epicyclic gear reducer (11) comprising three elements, a central sun gear (11A), an external ring gear (11B) and a planet carrier (11U) whose planets (11S) mesh with the sun gear and the ring gear, a first of the three elements being intended to be connected to the drive shaft (26) and a second of the three elements being coupled to the shaft of the pump (1), said drive device (6') being **characterized in that** said three elements are rotatably movable about an axis of the reducer, **in that** said transmission device further comprises at least first electrical means (12) arranged to drive in rotation the third of said elements of the reducer (11), so as to modify a rotational speed ratio between the drive shaft (26) and the shaft of the pump (1).

5. The fuel supply system according to the preceding claim, wherein the drive device (6') comprises second electrical means (13) coupled to the first or second of said elements of the reducer (11), the first and second electrical means being arranged to transfer electrical power reversibly from each other.

6. A turbomachine comprising a system according to one of the preceding claims.

7. The turbomachine according to the preceding claim, wherein an accessory relay box (5) is placed between a drive shaft (26) and the drive device (6').

**Fig. 1**

**Fig. 2**

**Fig. 3**

**Fig. 4a**

**Fig. 4b**

**Fig. 4**

**Fig. 4c**

**Fig. 5**

**Fig. 6**

**Fig. 7**

EP 3 574 200 B1

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016186670 A1